# EUROPEAN PATENT APPLICATION

(11) **EP 4 166 455 A1**
(43) Date of publication of application: **19.04.2023**
(21) Application number: 21202980.5
(22) Date of filing: 15.10.2021
(51) Int. Cl.: B64D 37/00, B64D 41/00

(54) **METHOD AND SYSTEM FOR TRANSMITTING ENERGY**

(71) Applicant: Beckers Innovation GmbH, 82024 Taufkirchen (DE)
(72) Inventor: Beckers, Wouter, 82024 Taufkirchen (DE)
(74) Representative: Grünecker Patent- und Rechtsanwälte PartG mbB

(57) **Abstract**

A method of transmitting energy comprises a production step of producing hydrogen, a first transferring step of transferring the hydrogen into a tank at a first location, a transporting step of transporting the tank to a second location using an aircraft, a second transferring step of transferring a transmitted portion of the hydrogen out of the tank at the second location, an oxidation step of oxidizing the transmitted portion to generate thermal, electrical or mechanical energy. A liquefaction step of converting the hydrogen to liquid hydrogen is carried out prior to the first transferring step, such that the hydrogen transferred into the tank is liquid hydrogen, a gasification step of gasifying the transmitted portion is carried out after the second transferring step, such that the transmitted portion is liquid in the second transferring step and gaseous in the oxidation step, and the aircraft is an airplane.

## Description

### TECHNICAL FIELD

The invention relates to a method and system for transmitting energy.

### BACKGROUND ART

Energy can be abundant at a distance from where it is required, especially renewable energy such as solar, wind, hydro and geothermal. Infrastructure that generates electricity from non-renewable energy sources may also be centralized and removed from population centers to enable capture and control of waste and greenhouse gases. Commonly, electricity from these sources is transmitted to population centers by cables and distributed through an electrical network. Portable batteries can be charged from the network to enable further distribution of the energy.

Additionally, hydrocarbons are used as an energy source that can be distributed using pipes and containers, to be oxidized to generate electrical and mechanical energy where required. Hydrogen has been proposed as a clean alternative to hydrocarbons that does not generate pollution when oxidized.

WO 2010 051088 A1 discloses a method according to the preamble of claim 1, and proposes to use geothermal, wind, solar, wave tidal or hydropower to generate electricity in-situ or very near to the primary energy sources, to use the electricity to produce hydrogen directly from water, and to deliver the hydrogen from the place where it is produced to the place where it is needed using an airship in which the hydrogen gas can also be used for generating lift, providing propulsion energy and serving ancillary needs.

### SUMMARY OF INVENTION

The airship of WO 2010 051088 A1 carries hydrogen in a mix of tanks and bladders at high, low and near ambient pressures. Therefore, energy must be consumed to pump the low and near ambient pressure hydrogen for further distribution in pipes and containers. This reduces the energy available for use.

It is an object of the invention to transmit energy in a manner that increases the amount of useful energy that is made available at a location that is removed from an energy source.

A method transmitting energy according to the invention comprises: a production step of producing hydrogen; a first transferring step of transferring the hydrogen into a tank at a first location; a transporting step of transporting the tank to a second location using an aircraft; a second transferring step of transferring a transmitted portion of the hydrogen out of the tank at the second location; an oxidation step of oxidizing the transmitted portion to generate thermal, electrical or mechanical energy; a liquefaction step of converting the hydrogen to liquid hydrogen prior to the first transferring step, such that the hydrogen transferred into the tank is liquid hydrogen; and a gasification step of gasifying the transmitted portion after the second transferring step, such that the transmitted portion is liquid in the second transferring step and gaseous in the oxidation step, wherein the aircraft is an airplane.

Since the transmitted portion is transferred from the tank at the second location in liquid form, the pumping work to consume or distribute the hydrogen at the second location can be reduced. The liquefaction that enables the pumping work to be reduced is carried out prior to transporting, so that it does not reduce an amount of energy made available at the second location from the transmitted portion. In other words, the invention exploits the abundance of energy at the first location to put the hydrogen in a form that increases the energy made available at the second location. Furthermore, the tank is transported using an airplane so that the transportation step can be carried out quickly, reducing an amount of time that the hydrogen in the tank absorbs heat, so that boiling of the liquid hydrogen can be reduced, and reduction of the amount of liquid hydrogen that is transmitted can be suppressed.

Preferably, in the transporting step, hydrogen is discharged from the tank and oxidized to provide thrust and/or auxiliary power to the airplane.

By utilizing the hydrogen from the tank for thrust and/or auxiliary power, energy and power systems in the airplane can be simplified. Furthermore, the discharge can reduce any increase in pressure in the tank due to boil-off.

Preferably, the hydrogen is discharged from the tank as liquid hydrogen and gasified prior to oxidation, and latent heat of evaporation of the hydrogen that is discharged from the tank is used to cool an airplane system and/or the transmitted portion.

By utilizing the latent heat of evaporation of the discharged hydrogen to cool the airplane system and/or the transmitted portion during the transportation step, airplane performance can be increased and/or boil off of the liquid hydrogen can be further suppressed, so that a reduction of the amount of liquid hydrogen that is transmitted can be further avoided.

Preferably, gaseous hydrogen is discharged from the tank to the atmosphere in the transporting step.

By discharging gaseous hydrogen to the atmosphere in the transporting step, the range of pressure that the tank is subjected to during the transportation step, especially during climb and cruise of the airplane, can be suppressed using a simple structure, so that the airplane and tank can be made light, increasing the efficiency of the transportation step.

Preferably, the method further comprises carrying out a control to prevent gauge pressure in the tank falling below a predetermined pressure in the transporting step, wherein the control consists of increasing a supply of heat to the tank and/or transferring hydrogen to the tank from an auxiliary tank, an evaporation circuit, or a heat exchanger.

By thus increasing the supply of heat to the tank and/or transferring hydrogen to the tank from the auxiliary tank, the range of pressure that the tank is subjected to is reduced, so that the tank can be made light, increasing the efficiency of the transportation step.

The tank can have a modular structure, and be attached to the airplane after the first transferring step and detached from the airplane before the second transferring step. This enables, the tank can be used for storage at the second location, without requiring the airplane. Alternatively, the tank is integrated with the airplane throughout the method.

Liquid hydrogen can be transported in two or more tanks in the airplane in the transporting step. This enables pressure in the tanks and trim of the airplane to be managed more easily.

Preferably, in the second transferring step, the liquid hydrogen is pumped from the tank directly to another tank on another airplane, and the gasification and oxidation steps take place on the other airplane. This minimizes storage and transfer steps so that boil-off can be reduced, allowing a maximum amount of energy to be made available to the airplane.

Preferably, the mass of the transmitted portion is greater than 30 percent of the empty weight of the airplane.

A system for transmitting energy according to the invention comprises: means for producing and liquefying hydrogen; first transferring means configured to transfer liquid hydrogen into a tank at a first location; the tank; an airplane capable of flying the tank; second transferring means configured to transfer a transmitted portion of the liquid hydrogen out of the tank at a second location; gasification means configured to gasify the transmitted portion; and oxidation means configured to oxidize the gasified portion to generate thermal, electrical or mechanical energy, wherein either the tank is integrated with the airplane, or the tank is configured to be attached to, and detached from, the airplane while containing liquid hydrogen.

Preferably, the airplane is configured to oxidize hydrogen from the tank to provide thrust and/or auxiliary power to the airplane.

Preferably, the airplane is further configured to use the latent heat of evaporation of liquid hydrogen that is drawn from the tank to cool an airplane system and/or a portion of liquid hydrogen that is retained in, or returned to, the tank.

Preferably, the airplane further comprises means for increasing a supply of heat to the tank and/or for transferring hydrogen to the tank from an auxiliary tank, an evaporation circuit or a heat exchanger, and a control device configured to actuate the means to prevent gauge pressure in the tank falling below a predetermined pressure.

These systems enable the advantages of the corresponding methods to be achieved.

Preferably, the tank is exposed to the outside of the airplane, and has an electric heater configured to heat an outer surface of the tank that is exposed to the outside of the airplane. The heater enables icing on the surface of the tank to be suppressed.

### BRIEF DESCRIPTION OF DRAWINGS

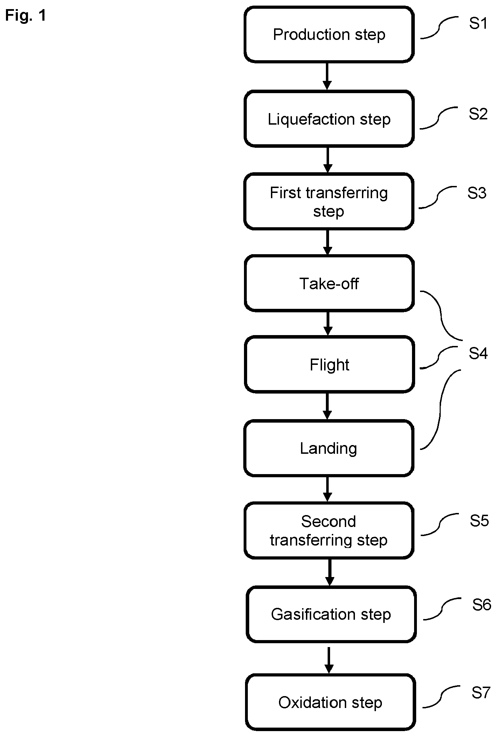

Fig. 1 is a diagram indicating the sequence of steps in a first and second embodiment of the invention

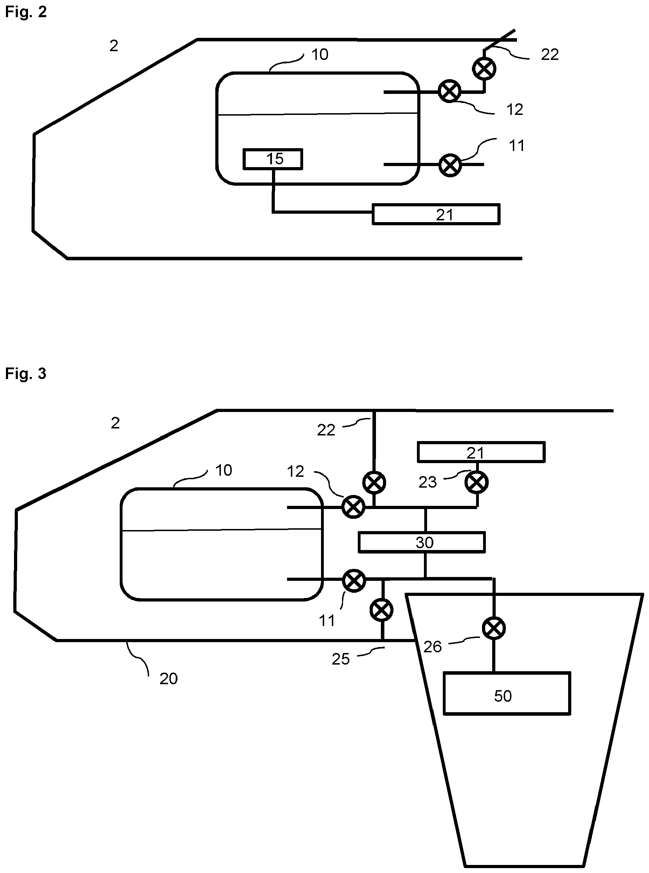

Fig. 2 is a schematic diagram showing elements of a tank and airplane that is used in the first embodiment
Fig. 3 is a schematic diagram showing elements of an airplane that is used in the second embodiment

### DESCRIPTION OF EMBODIMENTS

A first embodiment of the invention is carried out as follows.

In a production step S1, electricity is preferably generated from a renewable source such as wind, solar, geothermal or hydro power. However, the source of the electricity is not particularly limited. The electricity is then used to produce hydrogen from water through electrolysis.

Alternatively, hydrogen can be extracted from fossil fuels or biomass, e.g. by steam methane reforming, coal gasification, or biomass gasification.

Then, in a liquefaction step S2, the hydrogen is liquefied using conventional processes.

The liquefied hydrogen is then transferred into a tank 10 at a first location. This constitutes a first transfer step S3 using a first transfer means. The liquefied hydrogen may be in a slush mixed with frozen hydrogen.

The tank 10 has double-walled, partial vacuum insulation, has gas and liquid outlets 11,12, has a vacuum relief valve, and has an electric heater 15.

The tank 10 is then moved to an airplane 2 with an unpressurized compartment into which the tank 10 is loaded, physically secured and grounded. The airplane has a boil-off circuit 22 to which the gas outlet 12 of the tank 10 is attached so that gas can be discharged from the tank 10 to the boil-off circuit 22, and thence to the atmosphere. The airplane 2 also has an auxiliary electric power supply 21 that is connected to the electrical heater 15 of the tank 10.

The airplane 2 then flies the tank 10 to another location, the flight including take-off, climb, cruise, descent and landing.

During climb, a gauge pressure in the tank 10 increases due to boiling and a reduction in ambient pressure with altitude. At this time, gas is discharged from the tank 10 to the atmosphere using the boil-off circuit 22, so as to suppress the increase in gauge pressure and avoid excessive structural loads on the tank 10.

During subsequent cruise at altitude, additional gas can be discharged from the tank 10 to the boil-off circuit 22, and thence to the atmosphere, in order to continue to suppress the gauge pressure, depending on the boil-off rate and duration of the cruise.

During descent, the gauge pressure in the tank 10 decreases due to the reduction in ambient pressure. At this time, the electrical heater 15 is powered to increase the heat supplied to the liquid hydrogen in the tank 10 in order to increase the boil-off rate and thus increase the absolute pressure in the tank 10, so as to maintain a positive gauge pressure in the tank 10 to prevent buckling and excessive structural loads.

After landing, the boil off circuit and auxiliary power supply are disconnected from the tank 10, and the tank 10 is removed from the airplane 2. The tank 10 is then moved to a second location where a second transfer step is carried out.

In the second transfer step, a second transfer means transfers the liquid hydrogen from the tank 10 to be distributed and consumed through conventional means. For example, the hydrogen may be transferred into a highly insulated fixed storage tank from which gaseous and liquid hydrogen may be intermittently supplied, according to demand. The liquid hydrogen may also be transferred into insulated portable tanks adapted for road or rail transportation, to transport the liquid hydrogen on further prior to gasification and oxidation. The liquid hydrogen may also be directly transferred through a gasifier into an industrial process or pipeline. The liquid hydrogen may also be directly transferred into a tank of a vehicle, especially an airplane 2, that subsequently gasifies and oxidizes the hydrogen for power.

After the second transfer step, the tank 10 can be transported back to the first location or to different location in the vicinity of a different energy source, using various means, including the airplane 2. At this time, a quantity of hydrogen may be retained in the tank 10 to prevent contamination. If liquid hydrogen is retained, a latent heat of vaporization of the liquid hydrogen can be used to help maintain a low temperature in the tank 10 until it is filled again. Alternatively, the tank 10 may be purged with an inert gas.

In a modification of the first embodiment the compartment of the airplane 2 into which the tank 10 is loaded is at least partially pressurized. The pressurization of the compartment reduces a variation in the gauge pressure in the tank 10 during the flight, so that a boil-off circuit 22 may not be required. Instead, the tank 10 may be designed to withstand the expected variations in gauge pressure over the light, and/or to release a small amount of gaseous hydrogen inside the compartment, to be dispersed by the ventilation provided by the pressurization system.

In another modification of the first embodiment, the tank 10 is a first tank 10, and one or more additional tanks containing liquid hydrogen may be loaded into the compartment and flown with the airplane 2 in the transportation step. In this case, the boil-off circuit 22 and auxiliary power supply has connections for each tank. The one or more additional tanks may be unloaded with the first tank 10, or retained to subsequently be flown in the airplane 2 and unloaded at a different location. The one or more additional tanks may thus transport liquid hydrogen to a third location.

In a second embodiment, production and liquefaction steps are the same as in the first embodiment. The liquefied hydrogen is then transferred into a tank 10 at a first location. This constitutes a first transfer step using a first transfer means. However, unlike the first embodiment, the tank 10 is integrated with an airplane 2 throughout the method.

The tank 10 has a single metal wall with an outer surface to which a foam insulation is attached. In order to strengthen the attachment between the metal and the foam, the outer surface is texturized by a laser to provide a physical interlock between the foam and the metal. The tank 10 has gas and liquid outlets 11,12, and a vacuum relief valve. The tank 10 is fixed inside a fuselage 20 of the airplane 2.

The gas outlet 12 is connected to a gaseous circuit in the airplane 2. The gaseous circuit includes a boil-off circuit 22 which can discharge gaseous hydrogen from the tank 10 to the atmosphere, and an auxiliary fuel supply circuit 23 that supplies gaseous hydrogen to an auxiliary power unit 21 in the airplane 2.

The auxiliary power unit 21 includes a fuel cell that oxidizes the hydrogen to generate electricity for auxiliary power in the airplane 2. The auxiliary power unit also includes a compressor that pressurizes air from the environment, and a heat exchanger that used the gaseous hydrogen to cool the pressurized air prior to the air and gaseous hydrogen entering the fuel cell.

The liquid outlet 11 is connected to a liquid circuit in the airplane 2. The liquid circuit includes an externally accessible connection 25 through which liquid hydrogen can be transferred to and from the tank 10 from outside the airplane 2. The liquid circuit also includes a thrust fuel supply circuit 26 that supplies hydrogen to combustors of turbofans 50 that provide thrust to the airplane 2.

The thrust fuel supply circuit 26 includes a high pressure pump that pressurizes the liquid hydrogen, and an evaporator that gasifies the pressurized liquid hydrogen using heat from the turbofan exhaust, prior to the gasified hydrogen flowing to the combustors.

The airplane 2 also has an evaporator circuit that connects to the liquid circuit to the gaseous circuit via an evaporator 30.

After the first transfer step, the airplane 2 transports the tank 10 to the second location in the transporting step, flying at least part of the way. The flight including take-off, climb, cruise, descent and landing.

Throughout the flight, the liquid hydrogen in the tank 10 boils, increasing the volume of the hydrogen. At the same time, gaseous hydrogen is discharged from the tank 10 to be consumed by the auxiliary power unit and liquid hydrogen is discharged from the tank 10 to consumed by the turbofans 50. The external pressure on the tank 10 also changes with altitude. In order to avoid excessive structural loads on the tank 10, a low positive gauge pressure is maintained throughout the flight. This is achieved by increasing amount of gaseous hydrogen that is discharged from the tank 10 when the gauge pressure is high, e.g. using the boil-off circuit 22 to discharge gaseous hydrogen to the atmosphere, and by increasing the rate of boil-off when the gauge pressure is low, namely by circulating liquid hydrogen through the evaporator 30 and returning the gasified hydrogen to the tank 10.

After landing, the airplane 2 taxis to a second location where a second transfer step is carried out. A transmitted portion of the liquid hydrogen is transferred out of the tank 10 and the airplane 2 via the externally accessible connection 25. The subsequent gasification and oxidation of the hydrogen that is transferred out of the airplane 2 are the same as in the first embodiment.

The airplane 2 then flies back to the first location or to a different location in the vicinity of a different energy source, using hydrogen that is retained in the tank 10 as fuel for the auxiliary power unit and turbofans.

In a modification of the second embodiment, the gaseous circuit includes an auxiliary tank in which gaseous hydrogen can be stored at high pressure. The auxiliary tank can be used to store gaseous hydrogen instead of releasing it to the atmosphere via the boil-off circuit 22, to supply gaseous hydrogen to the tank 10 to suppress a reduction in gauge pressure instead of increasing the boil-off rate, and to temporarily supply gaseous hydrogen to the auxiliary power unit 21 during high fuel consumption periods.

In another modification of the second embodiment, the tank 10 is a main tank, and the liquid circuit includes one or more smaller secondary tanks. Liquid hydrogen is pumped between the main tank and the smaller secondary tanks to maintain the main tank in a state that is nearly full of liquid hydrogen during the transportation step and that is nearly full of gaseous hydrogen during subsequent flights, thereby suppressing slosh in the main tank. The smaller size of the secondary tanks also enables them to tolerate higher pressure variations, so that they can be used to temporarily store gaseous hydrogen at higher pressures as in auxiliary tanks.

Instead of, or in addition to, using heat from the turbofan exhaust to gasify the pressurized liquid hydrogen, heat from pressurized air from a compressor of the turbofan can be used. The cooled pressurized air can be supplied to higher pressure compressor stages or the combustor, allowing a power output to be increased. The cooled pressurized air can also be used to cool bearings, turbine blades, combustor linings, etc., enabling the amount of compressed air used to cool such components to be reduced, and thus reducing the total compressor work.

The pressurized liquid hydrogen can also be gasified using heat from a closed loop helium circuit that uses electricity from the auxiliary power unit 50 to pump heat from liquid hydrogen that is circulated back to the tank 10. By thus circulating supercooled liquid hydrogen to the tank 10, boil-off can be suppressed.

Although the embodiment is described with a single gaseous circuit connected to a gas outlet 12 and single liquid circuit connected to a liquid circuit, multiple separate gaseous and liquid circuits may be used.

Instead of the turbofan 50, thrust for the airplane 2 can be produced from a turboprop, a combustion engine, or a fuel cell and electric motor. Even in these cases, the liquid hydrogen enables efficient pumping of the large amounts of hydrogen required for thrust generation.

The tank 10 may be fixed inside a non-pressurized portion of the fuselage 20, or inside a portion that is pressurized or at least partially pressurized. When the portion is pressurized or at least partially pressurized, the pressurization system can be used to control the temperature of the air between the tank 10 and the fuselage skin, to suppress ice formation, etc.

In a modification that can be applied to both the first and second embodiments, tanks 10 can be mounted to the outside of the airplane 2. In this case, a boil-off circuit 22 can consist of a simple pressure relief valve that opens out into the atmosphere, and electrical heating may be provided to the outside of the tank 10 to suppress icing.

## Claims

1. A method of transmitting energy, comprising:
a production step (S1) of producing hydrogen;
a first transferring step (S3) of transferring the hydrogen into a tank (10) at a first location;
a transporting step (S4) of transporting the tank (10) to a second location using an aircraft;
a second transferring step (S5) of transferring a transmitted portion of the hydrogen out of the tank (10) at the second location;
an oxidation step (S7) of oxidizing the transmitted portion to generate thermal, electrical or mechanical energy,
**characterized by**
a liquefaction step (S2) of converting the hydrogen to liquid hydrogen prior to the first transferring step (S3), such that the hydrogen transferred into the tank (10) is liquid hydrogen; and
a gasification step (S6) of gasifying the transmitted portion after the second transferring step (S5), such that the transmitted portion is liquid in the second transferring step (S5) and gaseous in the oxidation step (S7), wherein
the aircraft is an airplane (2).

2. The method according to claim 1, wherein
in the transporting step (S4), hydrogen is discharged from the tank (10) and oxidized to provide thrust and/or auxiliary power to the airplane.

3. The method according to claim 2, wherein
the hydrogen is discharged from the tank (10) as liquid hydrogen and gasified prior to oxidation; and
latent heat of evaporation of the hydrogen that is discharged from the tank (10) is used to cool an airplane system and/or the transmitted portion.

4. The method according to any one of claims 1 to 3, wherein
gaseous hydrogen is discharged from the tank (10) to the atmosphere in the transporting step (S4).

5. The method according to any one of claims 1 to 4, further comprising
carrying out a control to prevent gauge pressure in the tank (10) falling below a predetermined pressure in the transporting step, wherein
the control consists of increasing a supply of heat to the tank (10) and/or transferring hydrogen to the tank (10) from an auxiliary tank, an evaporation circuit, or a heat exchanger.

6. The method according to any one of claims 1 to 5, wherein
the tank (10) has a modular structure, is attached to the airplane (2) after the first transferring step (S3) and detached from the airplane (2) before the second transferring step (S5).

7. The method according to any one of claims 1 to 5, wherein
the tank (10) is integrated with the airplane (2) throughout the method.

8. The method according to any one of claims 1 to 7, wherein
the tank (10) is a first tank;
a second tank containing liquid hydrogen is transported along with the first tank in the transporting step.

9. The method according to any one of claims 1 to 8, wherein
in the second transferring step (S5), the liquid hydrogen is pumped from the tank (10) directly to another tank on another airplane, and
the gasification and oxidation steps (S6,S7) take place on the other airplane.

10. The method according to any one of claims 1 to 9, wherein the mass of the transmitted portion is greater than 30 percent of the empty weight of the airplane (2).

11. A system for transmitting energy, comprising:
means for producing and liquefying hydrogen;
first transferring means configured to transfer liquid hydrogen into a tank at a first location;
the tank (10);
an airplane (2) capable of flying the tank (10);
second transferring means configured to transfer a transmitted portion of the liquid hydrogen out of the tank (10) at a second location; and
gasification means configured to gasify the transmitted portion; and
oxidation means configured to oxidize the gasified portion to generate thermal, electrical or mechanical energy, wherein either
the tank (10) is integrated with the airplane (2), or
the tank (10) is configured to be attached to, and detached from, the airplane (2) while containing liquid hydrogen.

12. The system according to claim 11, wherein
the airplane (2) is configured to oxidize hydrogen from the tank (10) to provide thrust and/or auxiliary power to the airplane.

13. The system according to claim 11 or 12, wherein the airplane (2) is further configured to use the latent heat of evaporation of liquid hydrogen that is drawn from the tank to cool an airplane system and/or a portion of liquid hydrogen that is retained in, or returned to, the tank.

14. The system according to any one of claims 11 to 13, wherein the airplane (2) further comprises
means for increasing a supply of heat to the tank (10) and/or transferring hydrogen to the tank from an auxiliary tank, an evaporation circuit, or a heat exchanger; and
a control device configured to actuate the means to prevent gauge pressure in the at least one tank falling below a predetermined pressure during flight.

15. The system according to any one of claims 11 to 14, wherein the tank is exposed to the outside of the airplane (2), and
the tank has an electric heater configured to heat an outer surface of the tank (10) that is exposed to the outside of the airplane (2).
